# FASCICULE DE BREVET EUROPEEN

(11) **EP 0 975 676 B1**
(45) Date de publication et mention de la délivrance du brevet: **14.08.2002**
(21) Numéro de dépôt: 98921568.6
(22) Date de dépôt: 20.04.1998
(51) Int. Cl.: C08B 37/14

(54) **PROCEDE DE TRAITEMENT DES GRAINES DE DICOTYLEDONES POUR EN RECUPERER UNE FRACTION DE L'ENDOSPERME**
VERFAHREN ZUR BEHANDLUNG VON DICOTYLENSAMEN UM EINE ENDOSPERMFRAKTION ZU ERHALTEN
METHOD FOR TREATING DICOTYLEDON SEEDS TO RECUPERATE THEREFROM AN ENDOSPERM FRACTION

(30) Priorité: 18.04.1997 FR 9704808
(43) Date de publication de la demande: 02.02.2000
(73) Titulaire: Meyhall AG, 8280 Kreuzlingen (CH)
(72) Inventeur: DELPRATO, François, F-95310 Saint-Ouen L'Aumône (FR); LAURENT, Hans-Peter, CH-8598 Bottighoffen (CH); URLACHER, Brice, F-78330 Fontenay-le-Fleury (FR)
(74) Mandataire: Ricalens, François
(86) Numéro de dépôt international: FR9800791
(87) Numéro de publication internationale: WO9847925

(56) Documents cités:
- FR-A- 920 185
- DATABASE WPI Week 9444 Derwent Publications Ltd., London, GB; AN 94-351073 XP002051813 & ES 2 058 028 A (ALIMENTARIA ADIN SA) , 16 octobre 1994 cité dans la demande
- PATENT ABSTRACTS OF JAPAN vol. 010, no. 252 (C-369), 29 août 1986 & JP 61 081755 A (TAKAI SEIFUNSHIYO:KK), 25 avril 1986

## Description

La présente invention a pour objet un procédé de traitement des graines de dicotylédones pour en récupérer une fraction de l'endosperme, et la fraction ainsi obtenue.

Elle concerne plus particulièrement les graines de dicotylédones dont l'endosperme contient des proportions importantes de galactomanannes.

Diverses industries, telles que les industries cosmétique, tinctoriale, alimentaire, celle du pétrole et celle des produits d'entretien recherchent des agents de texture qui modifient les propriétés rhéologiques des phases liquides et notamment des phases aqueuses. Parmi les produits les plus intéressants et parmi les plus employés sont les galactomannanes.

Ces galactomannanes sont des polyosides non ioniques extraits des graines de certaines légumineuses dont ils constituent le glucide de réserve.

Ainsi, la gomme de caroube est extraite des graines de caroubier *(Ceratonia siliqua)*, qui est un arbre à feuillage persistant originaire de Syrie et d'Asie mineure, mais cultivé sur tout le littoral méditerranéen.

La gomme guar, qui n'est apparue qu'après la seconde guerre mondiale pour pallier une pénurie de caroube, provient des graines de guar *(Cyamopsis tetragonolobus)*, plante annuelle initialement cultivée en Inde et au Pakistan et également produite aux Etats-Unis depuis 1950.

On peut également citer le cassia et le tara.

Le procédé de fabrication de ces gommes consiste à broyer l'endosperme des graines décortiquées pour obtenir une farine, à environ 90 % de galactomannane. La farine peut être commercialisée telle quelle ou après traitement(s).

En général, et plus spécifiquement pour la caroube, le traitement comporte les différentes étapes suivantes :
*a)* Les graines de caroube, de provenance variée, après une séparation par tamisage des corps étrangers, sont traitées dans un réacteur à une température supérieure à environ 100°C et en général aux alentours de 135°C. pendant une durée limitée par exemple 12 minutes, avec de l'acide sulfurique concentré par exemple 98%.
   Ce traitement est en général effectué avec un rapport de 10% en acide sulfurique, et de 90% en graines de caroube.
   Le traitement à l'acide sulfurique permet de retirer l'écorce (tégument) qui entoure chaque graine ;
*b)* Les graines sont ensuite lavées à l'eau, séchées puis refroidies jusqu'à obtenir des graines décortiquées propres ;
*c)* Dans le cas des cotylédons de taille suffisante (au moins égale à environ 3 mm et avantageusement à 4 mm, comme c'est le cas de la caroube), chaque graine est ensuite triée pour éliminer ou recycler les graines abîmées ou teintées dans la masse (mauvaise graine, traitement acide trop fort ou insuffisant...).
   Ce tri est en général un tri optique réalisé à l'aide d'appareillage de type trieuse optoélectronique chromatique (type Sortex, Sea, Ebbicon, Scan Mater...).
   Le tri optique peut permettre de mettre à part les graines mal décortiquées recouvertes par des fractions d'écorce encore importantes pour un recyclage. Dans les productions usuelles, 5% environ des graines sont ainsi rejetées ;
*d)* Ensuite, les graines sont traitées dans un moulin de manière à séparer physiquement l'endosperme de la graine en ses deux cotylédons, désignés parfois par l'expression anglo-saxonne "splits", et à libérer le germe central.
   Le germe central constitué principalement de protéines est rejeté et les cotylédons sont récupérés ;
*e)* Les cotylédons formant l'endosperme. ainsi obtenus et parfois appelés "splits", sont des hémisphères lenticulaires constitués très majoritairement de gomme. Dans le cas de la caroube, il s'agit d'un galactomannane dont le rapport mannose/galactose se situé aux alentours de 4.
   Ces cotylédons sont employés pour former une farine.

On a également proposé (banque de données WPI, semaine 9444 AN 94-351073, xp002051813) de frire des graines de caroube dans une huile alimentaire, de refroidir à l'eau, et de réaliser le pelage ou décorticage, c'est-à-dire l'élimination du tégument, par impact et abrasion.

Cette opération est sélective, car après un chauffage, le tégument est beaucoup plus friable que l'endosperme.

Le germe représente une fraction d'environ 33% en masse.

Il convient de rappeler que pour les applications alimentaires, les modifications de nature chimique du produit final et des procédés sont soumises à des réglementations très strictes et sont de ce fait à éviter.

On peut rappeler que les galactomannanes sont des macromolécules constituées d'une chaîne principale d'unités D-mannopyranose liées en β(1-4), portant des branchements latéraux constitués d'une seule unité D-galactopyranose liée en α(1-6) à la chaîne principale. Les différents galactomannanes se distinguent par la proportion d'unités α-D-galactopyranose présentes dans le polymère.

Pour la gomme guar, le rapport mannose/galactose (M/G) est de l'ordre de 2, et de 4 pour la gomme de caroube, ce qui signifie que la molécule de guar possède en moyenne deux fois plus de branchements.

Toutefois, la technique ci-dessus ne permet pas d'obtenir des gommes de blancheur très élevées.

Aussi, de nombreuses études ont été menées pour obtenir des farines et des gommes de meilleure blancheur. De nombreuses techniques ont été étudiées et permettraient d'atteindre ce type de qualité, mais le prix de revient s'est toujours révélé trop élevé pour que l'exploitation industrielle fût possible.

A ce jour les procédés chimiques poussés sont les seuls qui permettent une amélioration significative des propriétés de blancheur et de transparence.

Toutefois, les procédés chimiques conduisent en général à des altérations chimiques de la gomme et parfois à une baisse des propriétés texturantes.

Par ailleurs l'industrie est toujours à l'affût de composés présentant des propriétés texturantes de plus en plus élevées.

C'est pourquoi un des buts de la présente invention est de fournir un procédé qui permette l'obtention de farine de galactomannane dont les propriétés texturantes soient sensiblement plus élevées que celles obtenues habituellement.

Un autre but de la présente invention est de fournir un procédé du type précédent qui permette l'obtention de farine de galactomannane dont la blancheur soit très élevée.

Un autre but de la présente invention est de fournir un procédé du type précédent qui permette l'obtention de farine de galactomannane présentant des propriétés optiques (visuelles) améliorées, notamment telles que l'homogénéité (absence de points noirs + transparence en solution).

Un autre but de la présente invention est de fournir un procédé du type précédent qui permette l'obtention de farine de galactomannane dont les propriétés viscosantes soient supérieures d'au moins 30 % à celles obtenues par les voies usuelles (mesures en Pa.s sur une solution à 1 % en masse).

Un autre but de la présente invention est de fournir un procédé du type précédent qui, appliqué à la caroube, permette l'obtention de farine de galactomannane (de caroube) dont une solution à 1 % en masse présente, après 24 heures, une viscosité d'au moins égale à environ 3 Pa.s, avantageusement à environ 4 Pa.s, de préférence supérieure à 4,0 Pa.s.

Un autre but de la présente invention est de fournir un procédé du type précédent qui, appliqué à la caroube, permette l'obtention d'une farine de caroube dont une solution à 0,5 % en masse présentera une clarté (transmittance) accrue d'au moins 50%.

Un autre but de la présente invention est de fournir un procédé du type précédent qui, appliqué à la caroube, permette l'obtention d'une farine de caroube sans "points noirs" visibles à l'oeil.

Ces buts sont atteints au moyen d'un procédé de traitement de graines de dicotylédones contenant des galactomannanes qui comporte une étape d'abrasion où l'on abrase les cotylédons en surface pour en éliminer une quantité de matière c'est-à-dire une quantité d'endosperme (exprimée en masse) au moins égale à 2 %, avantageusement à 4 %, de préférence à 5 % et au plus égale environ 40 %, avantageusement à environ 30 %, de préférence à environ 20 % de la masse totale des cotylédons.

Ainsi, les quantités de matière exprimées ci-dessus ne prennent en compte ni le tégument (la peau), ni le germe, qui sont éventuellement présents et qui est éliminé avec le son pour ce qui est du tégument, ou qui peut l'être pour ce qui est du germe.

En principe l'essentiel du tégument (peau) est éliminé dans une étape antérieure, et le germe soit avant, soit après l'abrasion superficielle selon la présente invention.

Quoique cela ne soit pas favorable, il est loisible à l'homme du métier d'imaginer d'éliminer le tégument lors de l'abrasion superficielle, par exemple lors d'un premier passage.

Ainsi, l'abrasion superficielle ne doit pas se contenter d'éliminer le tégument, mais doit aussi enlever les quantités d'endospermes mentionnées ci-dessus.

Il est également préférable que les prétraitements ne comportent pas de traitement avec une huile, fût-elle alimentaire, en raison des produits de décomposition de l'huile et de l'altération des propriétés gustatives.

Il est également conseillé, de traiter des graines débarrassées pour l'essentiel de leur germe c'est-à-dire sous forme de cotylédons isolés ne contenant en masse qu'au plus 5 %, avantageusement au plus 2 %, de préférence au plus 1 % de la masse d'endosperme.

Il est préconisé de traiter plutôt des graines préalablement débarrassées de la plus grande partie de leur tégument. Il est souhaitable que statistiquement dans la fraction traitée, ce dernier ne recouvre qu'au plus 5 %, avantageusement au plus 2 %, de préférence au plus 1 % de la surface des cotylédons. Il est encore plus préférable de tomber à une valeur d'au plus 0,5 %.

C'est pourquoi, selon une variante avantageuse de la présente invention, cette étape peut s'insérer entre l'étape *c)* et l'étape *d)*, ou de préférence après l'étape *d)*.

Selon une mise en oeuvre particulièrement avantageuse de la présente invention, le polissage (qui est pris dans la présente description dans le sens d'abrasion superficielles) des cotylédons, est mené à l'aide d'un polisseur du type de ceux employés pour le riz.

En effet bien qu'ils fussent prévus pour le riz, membre de la famille des monocotylédones et qu'ils fussent donc prévus pour des corps présentant un axe de symétrie de rotation et ne présentant pas de points anguleux, ces appareils ont pu donner de bon résultats avec les cotylédons visés par l'invention, et ce sans perdre beaucoup de matière (endosperme).

Cet effet est particulièrement surprenant pour les cotylédons de guar, pour lesquels un effet de taille se surajoute à l'inconvénient de la forme ; car les cotylédons de guar étant de taille plus petite, ils présentent un rapport surface/masse plus élevé (rappelons que la surface géométrique spécifique varie comme l'inverse du diamètre et donc moins favorable à l'abrasion superficielle).

Dans cette mise en oeuvre, l'endosperme (par exemple de caroube) sous la forme de ses cotylédons non séparés ou après séparation et élimination du germe, est poli par contact avec une meule en rotation. La rotation sur elle-même de l'objet à polir permet, à chaque partie de la surface d'être en contact avec la meule, surtout lorsque la forme de l'objet à polir, ici la graine ou la portion de graine qu'est le cotylédon, est telle que la surface de l'objet à polir est convexe. La surface de l'objet à polir est convexe lorsque la courbure est dirigée vers l'intérieur dudit objet.

Ainsi, le fait que les cotylédons de dicotylédones soient de forme plan convexe, voire même concave convexe, donnent de bons résultats est quelque peu surprenant.

Le temps de séjour à l'intérieur du polisseur est contrôlé soigneusement et réglé à l'aide d'un frein, pour éviter que l'échauffement dû au frottement entre la graine et la meule ne provoque une trop forte augmentation de température, d'au plus égale à environ 100°C.

A titre de guide pour l'homme du métier, on peut indiquer que pour respecter la condition ci-dessus, pour les polisseurs industriels de type SATAKE TYPE KB20G ou KB 40G le temps de séjour par passage est avantageusement compris entre 5 et 60 secondes pour un passage, pour les appareil continus.

Pour les appareils pilotes du type SATAKE TM 5, le temps de séjour est avantageusement compris entre 20 et 360 secondes.

La fraction fine issue de l'abrasion, c'est-à-dire le son, est évacuée par force centrifuge et/ou gravité selon le type de polisseur à travers une grille de tamisage. Plus précisément, la graine "roule" entre la meule et la grille de tamisage, et s'abrase progressivement.

L'opération est renouvelée (passage) autant de fois que nécessaire pour atteindre le taux désiré d'élimination de la couche superficielle, c'est-à-dire au voisinage du périsperme.

Ainsi, ledit polissage de la surface est avantageusement réalisé par plusieurs abrasions successives éliminant chacune au moins 0,5 %, avantageusement au moins 1 %, de préférence au moins 2 %, et au plus environ 10 %, avantageusement au plus 8 %, de préférence 5 % de la masse de cotylédons.

Le premier passage est souvent mené de manière à avoir un taux de son plus élevé que les passages suivants.

On obtient de bons résultats en limitant le taux de son, pour le premier passage à environ 2 à 8 %.

Le réglage du taux de son est obtenu en jouant sur l'écartement entre le rotor et la grille (stator) et sur le temps de séjour.

L'écartement entre la meule (rotor mobile) et la grille (stator) doit être au moins égal à l'épaisseur d'un cotylédon à traiter:

Ainsi, a titre indicatif,
- pour la caroube, l'épaisseur des cotylédons est de 2 mm et celle des graines est de 4 mm,
- pour le guar, l'épaisseur des cotylédons est de 0,7 mm et celle des graines est de 1,5 mm.

La grille du stator présente une maille dont la taille et la forme sont définies de manière que les graines entières ou les cotylédons ne passent pas au travers des grilles. Ainsi, la maille de la grille du stator doit permettre l'évacuation des sons et des éventuelles fractions de germes, et retenir les cotylédons.

A titre indicatif, pour la caroube, la grille du stator présente une maille dont la largeur est avantageusement d'environ 1 à 3 mm et la longueur est avantageusement d'environ 2 à 6 mm.

Ainsi, le rayon équivalent de la maille de la grille du stator doit être au maximum juste inférieur au rayon équivalent de la graine à traiter. De préférence, on choisira des mailles dont le rayon équivalent est au moins deux fois inférieur à celui de la graine à traiter.

Il est souhaitable que ladite abrasion de la surface soit menée de manière à privilégier l'abrasion de la partie du cotylédon proche du ou en contact avec le périsperme, et plus spécifiquement avec le tégument.

Il est souhaitable que comme indiqué dans l'exposé du problème, ladite étape d'abrasion soit précédée d'une étape d'élimination partielle du tégument par attaque chimique.

Il est souhaitable que, comme indiqué dans l'exposé du problème, l'étape d'élimination partielle du tégument soit suivie d'une étape d'élimination par tri des graines de couleur sombre réputées de mauvaise qualité.

A partir des cotylédons, une farine de caroube est obtenue par broyage dans des moulins du type :
- moulins à cylindre pour les farines de granulométrie moyenne type mesh 100, c'est-à-dire une farine présentant au plus 1% en masse de particules supérieures à 80 mesh et au plus 10% en masse de particules inférieures à 200 mesh ;
- moulins à broches (pin mills) pour les farines de granulométrie plus fine :
   □ type mesh 200, c'est-à-dire une farine ne présentant pas de particules supérieures à 80 mesh et présentant au plus 60 % en masse de particules inférieures à 200 mesh, et
   □ type mesh 175, c'est-à-dire une farine présentant au plus 1% en masse de particules supérieures à 80 mesh et au plus 75% en masse de particules inférieures à 200 mesh.

Pour les farines de caroube solubles à froid, type MEYPRODYN®, le broyage s'effectue sur des cotylédons préhydratés.

Le polissage des cotylédons (notamment de caroube) peut intervenir après l'étape *d),* ou bien entre l'étape c) et l'étape *d),* soit juste après l'éventuel tri optique des graines décortiquées. Dans ce dernier cas, l'écartement entre la meule et la grille du tamis doit être augmenté.

L'avantage de travailler avec des graines complètes réside dans la symétrie de révolution de la graine et dans son caractère convexe, par comparaison avec les cotylédons formant l'endosperme : la graine "roule" mieux et les gains de blancheur sont, dans le premier passage, très significatifs.

En revanche, la contrainte mécanique soumise à la graine lors du polissage entraîne la division d'une fraction non négligeable de la graine. Il faudrait alors opérer un tamisage après polissage pour séparer les fractions de germes des endospermes.

Un des avantages de la technique selon la présente invention réside dans le fait que les machines à polir sont largement utilisées dans l'industrie céréalière pour des produits tels que le riz. Elles sont donc faciles à trouver sur le marché.

On peut traiter de cette façon les cotylédons de caroube mais aussi ceux de cassia et de tara. Le guar peut également être traité de cette façon, quoique l'augmentation de viscosité soit moins significative (la viscosité de départ est très élevée pour une solution de guar à 1 %).

Un autre but de la présente invention est de fournir une farine de galactomannane du type précédent qui présente des qualités améliorées.

Ce but est atteint au moyen d'une farine susceptible d'être obtenue par broyage des cotylédons traités par le procédé ci-dessus et qui comporte notamment une étape d'abrasion où l'on abrase les cotylédons en surface pour en éliminer une quantité de matière, c'est-à-dire une quantité d'endosperme (exprimée en masse) au moins égale à 2 %, avantageusement à 4 %, de préférence à 5 % et au plus égale environ 40 %, avantageusement à environ 30 %, de préférence à environ 20 % de la masse totale des cotylédons.

Les farines selon l'invention présentent avantageusement une, plusieurs ou la totalité des caractéristiques suivantes :
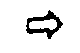 une blancheur supérieure ou égale à 35, avantageusement au moins égale à 37 (selon une échelle utilisant une référence de blanc 100, déterminée par mesure optique sur l'axe Noir-Blanc par rapport à une porcelaine blanche type 4-300) ;
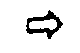 une teneur en protéine au plus égale à 5 %, avantageusement à 4,5 % ; et même pour le guar, en sacrifiant au moins 15 % en masse de l'endosperme, une teneur d'au plus égal à 3,5 % en protéine, valeurs pouvant atteindre au plus égale à 3,0 % lorsque les graines sont de bonne qualité :
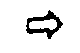 une teneur en insolubles dans les acides au plus égale à 1,5 %, avantageusement à 1,2 %, de préférence à 1 % ;
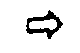 une couleur de la farine (mesurée par la méthode LAB NFX0811, 08012 ou 08015) d'au moins 94;
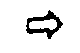 que ses solutions à 0,5 % en masse dans l'eau présentent une absorbance ou densité optique (DO) au plus égale à 0,5, avantageusement à 0,4, de préférence à 0,3 ;
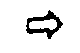 que ses solutions notamment pour la caroube à 1 % en masse dans l'eau présentent une viscosité d'au moins 3 Pa.s , avantageusement d'au moins 3,5 Pa.s, de préférence d'au moins 4 Pa.s, plus préférentiellement d'au moins 4,5 Pa.s.

Lesdits cotylédons sont avantageusement de caroube.

La présente invention vise également les compositions aqueuses qui comportent à l'état dissous une farine obtenue selon l'invention, évidemment sans en contenir le son ou un son équivalent.

La présente invention vise également l'utilisation comme agent texturant des farines et des compositions ci-dessus, et ce notamment dans l'industrie alimentaire, pour les glaces, les sorbets, les crèmes glacées.

La richesse en protéine du son et la relative faible viscosité de ses solutions peut conduire à l'utiliser dans d'autre domaine de l'alimentation et dans la nutrition notamment animale.

Les exemples non limitatifs suivants illustrent l'invention.

### EXEMPLES

### Mode opératoire général et Principe de fonctionnement:

Les endospermes de caroube sont polis par contact avec une meule en rotation. La rotation sur elle-même de la graine permet à chaque partie de la surface d'être en contact avec la meule.

Le temps de séjour à l'intérieur du polisseur est réglé à l'aide d'un frein et la température est contrôlée soigneusement car le contact entre la graine et la meule qui provoque un échauffement.

La fraction abrasée (ou son) est évacuée par force centrifuge et/ou gravité selon le type de polisseur à travers une grille de tamisage.

En fait, la graine "roule" entre la meule et la grille de tamisage.

L'opération est renouvelée (passage) autant de fois que nécessaire.

Après chaque passage sont contrôlés les paramètres suivants:
- le pourcentage en son (ou rendement en fines)
- la teinte (mesure du "blanc" global par comparaison avec un étalon); selon une échelle utilisant une référence de blanc 100, déterminée par mesure optique sur l'axe Noir-Blanc par rapport à une porcelaine blanche type 4-300 ; cette méthode étant surtout adaptée à mesurer une différence (gain ou perte) plutôt qu'une valeur absolue ; de ce fait il ne s'agit pas d'une grandeur mesurable mais plutôt d'une valeur sur une échelle.

Les endospermes une fois polis, sont broyés dans des moulins pour produire une farine de caroube de fraction granulométrique contractée. Sur cette farine de caroube sont mesurées les caractéristiques suivantes:
- viscosité à chaud pour une solution 1% en masse,
- teneur en protéines,
- teneur en insolubles en milieu acide,
- clarté d'une solution à 0,5%.

La source des graines est le Portugal.

### Exemple 1: polissage des cotylédons

A partir d'endospermes de graines de caroube provenant du même lot et traitées comme décrit dans points *a)*, *b)*, *c)* et *d)*, deux fractions comparables en quantité et identiques en composition sont prélevées:

La première fraction appelée A est conservée pour broyage ultérieur.

La seconde fraction est traitée avec un polisseur ou blanchisseur de type SATAKE KB 406 de capacité 2 T/H :
- vitesse de la meule ≅ 850 tours par minute
- temps de séjour par passage ≅ 5 - 10 secondes
- température intérieure ≅ 50°C

Deux passages ont été effectués (sur le premier on a prélevé une fraction B1 et sur le deuxième on a prélevé une fraction B2), et deux sons ont été récoltés (fractions C1 et C2).

Les résultats sont récapitulés dans le Tableau I.

**Tableau I**

| | **A** | **B1** | **B2** | **C1** | **C2** |
|---|---|---|---|---|---|
| % récupéré | 100 | 93 | 90 | 7 | 10 |
| Blancheur | 33 | 36 | 38 | - | - |
| % protéine | 6,2 | 4,9 | 4,5 | 10,5 | 12,5 |
| % matières insolubles en milieu acide | 2,6 | 1,6 | 1,0 | 4,4 | 8,6 |

A partir des fractions de cotylédons A, B1 et B2 des farines de type Mesh 200 ont été préparées dont les caractéristiques sont résumés dans le Tableau II :

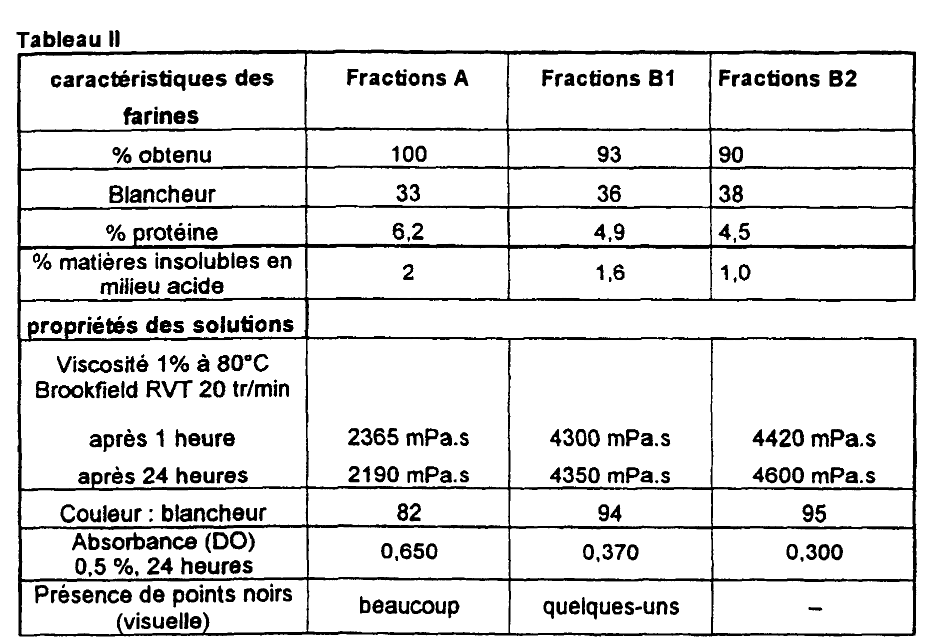

Les résultats obtenus montrent :
- un gain de blancheur net > 15 %,
- une concentration des protéines dans les sons,
- une concentration des matières insolubles en milieu acide dans les sons.

### Exemple 2 : polissage des graines

Les graines décortiquées, lavées, séchées et triées comme décrit dans les points *a), b)* et *c)* sont polies avec un polisseur à riz de type SATAKE Testing Mill TM 05.

Les mêmes paramètres de fonctionnement ont été choisis que dans l'exemple 1), mais trois passages ont été réalisés.

Les résultats obtenus sont rassemblés dans le Tableau III :

**Tableau III :**

| | **A** | **B1** | **B2** | **B3** |
|---|---|---|---|---|
| % récupéré | 100 | 92 | 85 | 81 |
| Teintes (% blancheur) | 18 | 29 | 32 | 34 |

Dans cet exemple, puisqu'il s'agit de graines et non de cotylédons, la mesure de la teneur en protéines et des insolubles n'a pas été faite.

En effet les résultats ne pourraient être correctement interprétés en raison de la présence du germe dans la matière traitée initialement, germe riche en protéines et partiellement éliminé au cours du traitement.

Une fois les graines divisées et séparées de leurs germes, des farines de type Mesh 200 sont préparées par broyage. Leurs propriétés ont été mesurées.

Les mesures sont rassemblées dans le Tableau IV :

**Tableau IV**

| **propriétés** | **FA** | **FB1** | **FB2** | **FB3** |
|---|---|---|---|---|
| Viscosité 1% à 80°C Brookfield RVT 20 tr/min | | | | |
| après 1 heure | 2300 | 4200 | 4300 | 4500 |
| après 24 heures | 2100 | 4100 | 4200 | 4600 |
| Couleur/blancheur | 82 | 94 | 95 | 95 |
| Insolubles (D.O.) à 0,5%, 24 H | 0,57 | 0,350 | 0,330 | 0,300 |
| Présence de Points noirs (visuel) | beaucoup | quelques-uns | - | - |

### Exemple 3: polissage d'endospermes (cotylédons) de graines de guar

Deux fractions identiques en composition et comparables en quantité sont prélevés d'un même lot d'endospermes de graines de guar:

La première Fraction A est conservée comme témoin après broyage ultérieur. La seconde Fraction B est traitée avec un polisseur à riz de type Satake testing mill TMO5.

On fait varier le temps de séjour dans le polisseur.

On prélève des échantillons d'endosperme après différents temps de séjour dans le polisseur, et on recueille par tamisage la fraction abrasée (tamis Mesh 12).

Les résultats (après correction des prises d'échantillon) obtenus sont rassemblés dans le Tableau V :

**Tableau V**

| **Fraction** | **A** | **B**_{**1**} | **B**_{**2**} | **B**_{**3**} |
|---|---|---|---|---|
| Temps de séjour dans le polisseur (minutes) | 0 | 2,5 | 7 | 10 |
| % endosperme récupérée | 100 | 89 | 86 | 83 |
| % Sons (tamisage 12 Mesh) | 0 | 11 | 14 | 17 |

A partir des fractions d'endospermes récupérées, des farines de type Mesh 200, toute chose égale par ailleurs, ont été préparée dont les caractéristiques sont rassemblées dans le Tableau VI :

**Tableau VI**

| **Caractéristiques** | **farines obtenues à partir des endospermes** | | | |
|---|---|---|---|---|
| | **A** | **B**_{**1**} | **B**_{**2**} | **B**_{**3**} |
| rendement obtenu (en % masse) | 0 | 89 | 86 | 83 |
| Protéines (en % masse) | 3,8 | 3,6 | 3,4 | 3,2 |
| Matière insoluble en milieu acide (en % masse) | 1,65 | 1,45 | 1,4 | 1,25 |
| Blancheur | 30 | 33 | 36 | 39 |
| son (en % masse) : rendement / teneur en protéines / teneur en matière insoluble en milieu acide | - | 11/ 5,4 / 3,2 | 14 /6,1/ 3,2 | 17 / 6,7 / 3,6 |

Les résultats obtenus montrent:
- un gain de blancheur des farines obtenues par polissage des cotylédons,
- une concentration des protéines dans les sons,
- une concentrations des matières insolubles en milieu acides dans le son.

On observe en outre une augmentation de la viscosité, bien que moins importante que dans le cas de la caroube.

## Revendications

1. Procédé de traitement de graines de dicotylédones contenant des galactomannanes, **caractérisé :**
- **par le fait qu'**il comporte une étape d'abrasion où l'on abrase les cotylédons en surface pour en éliminer une quantité de matière (exprimée en masse) au moins égale à 2 %, et au plus égale environ 40 % de la masse totale des cotylédons, et
- **par le fait que** l'étape d'abrasion est effectuée sur des graines dans lesquelles le tégument ne recouvre qu'au plus 5 % de la surface des cotylédons.

2. Procédé selon la revendication 1, **caractérisé par le fait que** ladite étape d'abrasion est précédée d'une étape d'élimination partielle du tégument par attaque chimique.

3. Procédé selon l'une des revendications 1 ou 2, **caractérisé par le fait que** ladite abrasion des cotylédons en surface est menée à l'aide d'un polisseur du type de ceux employés pour le riz.

4. Procédé selon les revendications 1 à 3, **caractérisé par le fait que** ladite abrasion de la surface est réalisée par plusieurs abrasions successives éliminant chacune au moins 0,5 %, et au plus environ 10 % de la masse de cotylédons.

5. Procédé selon les revendications 1 à 4, **caractérisé par le fait que** l'étape d'élimination partielle du tégument est suivie d'une étape d'élimination par tri des graines de couleur sombre réputées de mauvaise qualité.

6. Procédé selon les revendications 1 à 5, **caractérisé par le fait que** ladite étape d'abrasion est précédée d'une étape de division de l'endospermes en ses deux cotylédons (split), et d'une étape d'élimination du germe.

7. Procédé selon les revendications 1 à 6, **caractérisé par le fait que** l'étape d'abrasion est suivie d'une étape de meunerie conduisant à une farine.

## Patentansprüche

1. Verfahren zur Behandlung von Samenkörnern von Dikotyledonen, welche Galaktomannane enthalten, **dadurch gekennzeichnet:**
- **dass** es einen Schritt des Abschleifens umfasst, bei welchem man die Kotyledonen auf der Oberfläche abschleift, um eine Materialmenge (ausgedrückt als Masse) von wenigstens gleich 2 % und von höchstens gleich ca. 40 % der Gesamtmasse der Kotyledonen zu entfernen, und
- **dass** der Schritt des Abschleifens mit Samenkörnern durchgeführt wird, bei welchen die Hülle nicht mehr als 5 % der Oberfläche der Kotyledonen bedeckt.

2. Verfahren nach Anspruch 1, **dadurch gekennzeichnet, dass** dem genannten Schritt des Abschleifens ein Schritt einer partiellen Entfernung der Hülle durch einen chemischen Angriff vorausgeht.

3. Verfahren nach einem der Ansprüche 1 oder 2, **dadurch gekennzeichnet, dass** das genannte Abschleifen der Kotyledonen an der Oberfläche mit Hilfe eines Schleifers eines solchen Typs, wie er für den Reis eingesetzt wird, ausgeführt wird.

4. Verfahren nach den Ansprüchen 1 bis 3, **dadurch gekennzeichnet, dass** das genannte Abschleifen der Oberfläche durch mehrere aufeinander folgende Abschleifungen realisiert wird, die jeweils wenigstens 0,5 % und höchstens ca. 10 % der Masse der Kotyledonen entfernen.

5. Verfahren nach den Ansprüchen 1 bis 4, **dadurch gekennzeichnet, dass** auf den Schritt der partiellen Entfernung der Hülle ein Schritt der Entfernung von Samenkörnern mit dunkler Farbe, was eine schlechte Qualität darstellt, über ein Aussortieren folgt.

6. Verfahren nach den Ansprüchen 1 bis 5, **dadurch gekennzeichnet, dass** dem genannten Schritt des Abschleifens ein Schritt der Teilung der Endospermen in ihre zwei Kotyledonen (Split) und ein Schritt der Entfernung des Keims vorausgehen.

7. Verfahren nach den Ansprüchen 1 bis 6, **dadurch gekennzeichnet, dass** dem Schritt des Abschleifens ein Müllerei-Schritt folgt, welcher zu einem Mehl führt.

## Claims

1. A process for treating dicotyledon seeds containing galactomannans, **characterized in that**:
• it comprises an abrasion step in which the cotyledons are surface abraded to eliminate a quantity of material (expressed as the mass) of at least 2% and at most about 40% of the total cotyledon mass; and
• the abrasion step is carried out on seeds in which the seed coat only covers at most 5% of the cotyledon surface.

2. A process according to claim 1, **characterized in that** said abrasion step is preceded by a step for partial elimination of the seed coat by chemical attack.

3. A process according to claim 1 or claim 2, **characterized in that** said cotyledon surface abrasion is carried out using a polisher of the type used for rice.

4. A process according to any one of claims 1 to 3, **characterized in that** said surface abrasion is carried out by means of a plurality of successive abrasion steps each eliminating at least 0.5% and at most about 10% by weight of the cotyledons.

5. A process according to claims 1 to 4, **characterized in that** the step for partial elimination of the seed coat is followed by a step for eliminating dark coloured seeds known to be of poor quality by sorting.

6. A process according to claims 1 to 5, **characterized in that** said abrasion step is preceded by a step for dividing the endosperms into their two cotyledons (splits) and by a germ eliminating step.

7. A process according to claims 1 to 6, **characterized in that** the abrasion step is followed by a mill operation to produce flour.
